# FASCICULE DE BREVET EUROPEEN

(11) **EP 0 600 768 B1**
(45) Date de publication et mention de la délivrance du brevet: **23.10.1996**
(21) Numéro de dépôt: 93402856.4
(22) Date de dépôt: 24.11.1993
(51) Int. Cl.: B23P 6/00, B23K 26/00, B24C 3/32

(54) **Procédé et dispositif de réparation d'une zone défectueuse de la paroi d'une pièce métallique et en particulier d'une pièce tubulaire**
Verfahren und Vorrichtung zum Reparieren der defekte Zone einer Wand von einem metallischen Element insbesondere von einem rohrförmigen Element
Method and device for the repair of a defective zone of a metallic piece and particularly of a tubular piece

(30) Priorité: 30.11.1992 FR 9214407
(43) Date de publication de la demande: 08.06.1994
(73) Titulaire: FRAMATOME, 92400 Courbevoie (FR)
(72) Inventeur: Cartry, Jean-Pierre, F-69003 Lyon (FR)
(74) Mandataire: Bouget, Lucien

(56) Documents cités:
- EP-A- 0 181 810
- EP-A- 0 261 376
- EP-A- 0 300 458
- EP-A- 0 515 173
- GB-A- 2 098 732
- US-A- 4 878 953
- PATENT ABSTRACTS OF JAPAN vol. 013, no. 258 (M-838)15 Juin 1989 & JP-A-10 062 290 (MITSUBISHI) 8 Mars 1989
- PATENT ABSTRACTS OF JAPAN vol. 015, no. 418 (P-1266)23 Octobre 1991 & JP-A-31 070 093 (HITACHI LTD) 23 Juillet 1991

## Description

L'invention concerne un procédé et un dispositif de réparation d'une zone défectueuse de la paroi d'un adaptateur traversant le couvercle de la cuve d'un réacteur nucléaire refroidi par de l'eau sous pression. Voir par exemple document JP-A-3170093.

Les réacteurs nucléaires à eau sous pression comportent généralement une cuve renfermant le coeur du réacteur qui est plongé dans l'eau sous pression de refroidissement du coeur.

La cuve du réacteur, de forme générale cylindrique, comporte un couvercle de forme hémisphérique qui peut être rapporté sur sa partie supérieure. Le couvercle est percé d'ouvertures au niveau de chacune desquelles est fixée par soudure, une pièce tubulaire de traversée constituant un adaptateur assurant le passage de la commande de déplacement d'un prolongateur d'une grappe de contrôle de la réactivité du coeur ou un passage de traversée d'un moyen de mesure à l'intérieur du coeur tel qu'une colonne de thermocouples.

Sur les parties d'extrémité de chacun des adaptateurs, sont fixés les mécanismes de commande de déplacement des grappes de contrôle de la réactivité du coeur.

A l'intérieur de chacune des traversées tubulaires du couvercle de cuve, est fixée, dans une position coaxiale par rapport à la pièce tubulaire de traversée et avec un certain jeu radial, une manchette thermique qui comporte une partie élargie diamétralement venant reposer sur une portée d'appui élargie située à la partie supérieure de l'alésage de la pièce tubulaire de traversée et qui est montée libre en rotation à l'intérieur de la traversée.

Les prolongateurs des barres de commande de la réactivité du réacteur nucléaire traversent le couvercle de cuve, à l'intérieur des manchettes thermiques qui sont elles-mêmes disposées coaxialement à l'intérieur des adaptateurs des barres de commande ou, plus généralement, à l'intérieur des pièces tubulaires de traversée du couvercle.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire et des réparations de ces éléments, lorsque des défauts sont détectés.

En particulier, il peut être nécessaire de contrôler l'état des pièces de traversée du couvercle de la cuve, pour s'assurer de l'intégrité de ces pièces, après un certain temps de fonctionnement du réacteur, en particulier dans la zone où ces pièces tubulaires sont soudées sur le couvercle de cuve.

On a proposé divers procédés et dispositifs de contrôle permettant de déceler des défauts sur la surface interne de la pièce tubulaire de traversée et de réaliser la réparation des défauts qui ont été décelés et localisés.

En particulier, on a proposé des procédés et des dispositifs permettant d'effectuer le contrôle par des ultrasons ou des courants de Foucault ou encore par une méthode de ressuage avec examen endoscopique à distance de la surface intérieure de la pièce de traversée telle qu'un adaptateur.

Afin d'effectuer la réparation des zones présentant des défauts et en particulier des fissures s'étendant sur une certaine profondeur dans la paroi de l'adaptateur, à partir de sa surface interne, on a proposé divers procédés tels que l'affouillement par usinage suivi d'un rechargement dans la zone défectueuse, l'affouillement des défauts par usinage sans rechargement ou encore le revêtement par une couche telle qu'une couche de nickel électrolytique.

Les contrôles ou réparations effectués sur la surface intérieure de l'adaptateur nécessitent le plus souvent un démontage de la manchette thermique pour accéder à la surface intérieure de l'alésage de l'adaptateur.

Les contrôles et réparations sont effectués lors d'un arrêt du réacteur nucléaire, le couvercle de la cuve étant démonté et placé sur un stand d'intervention.

La plupart des procédés de réparation utilisés jusqu'ici nécessitent un repérage et une localisation précise des fissures ainsi qu'une détermination de la profondeur de pénétration des fissures dans la paroi de l'adaptateur. Il peut être nécessaire d'effectuer plusieurs passes d'usinage avec un contrôle de la zone usinée, entre deux passes d'usinage successives.

En outre, lorsqu'il s'avère nécessaire d'effectuer une réparation par rechargement, après affouillement de la surface de l'adaptateur, des contraintes sont créées dans le métal déposé par rechargement et dans le métal de l'adaptateur au voisinage de la zone rechargée. Ces contraintes peuvent être à l'origine d'une nouvelle fissuration de l'adaptateur, après remise en service du couvercle de la cuve et après un fonctionnement d'une certaine durée du réacteur.

La méthode de réparation des adaptateurs doit pouvoir être mise en oeuvre à distance, de manière très sûre et avec des opérations de contrôle les moins nombreuses possibles.

Les réparations effectuées doivent également permettre d'éviter l'apparition de nouvelles fissurations dans les zones réparées ou à leur voisinage.

On connaît par le JP-A-10062290, un procédé de réparation d'un tube tel qu'un tube de générateur de vapeur dont la paroi est traversée par une fissure. Le procédé consiste à fondre une partie de la paroi du tube en utilisant un faisceau laser, pour fermer la fissure par soudure. Un tel procédé ne permet pas de mettre la paroi du tube dans une état métallurgique lui permettant de résister à la corrosion sous tension et de restaurer les propriétés d'une zone défectueuse de la paroi.

On connaît par le EP-A-0.181.810, un procédé de martelage d'un tube après sertissage de manière à réduire les contraintes résiduelles dans une zone de transition du tube entre une zone déformée et une zone non déformée. Le martelage est réalisé par des petites particules projetées contre la surface intérieure du tube.

Le procédé suivant le EP-A-0.181.810 qui est essentiellement un procédé de détensionnement d'un métal après une opération de formage à température ambiante ne permettrait pas de restaurer la paroi d'un tube présentant des défauts tels que des fissures.

En outre, ni le procédé selon le JP-A-10062290 ni le procédé selon le EP-A-0.181.810 ne sont prévus dans le cadre d'une opération de réparation d'un adaptateur traversant le couvercle de la cuve d'un réacteur nucléaire. Dans une telle opération, il est nécessaire d'effectuer un démontage de la manchette thermique de l'adaptateur, de repérer la zone défectueuse de l'adaptateur et de réaliser la réparation de telle sorte que le métal de la paroi de l'adaptateur soit entièrement restauré. On peut alors replacer la manchette thermique sans risque de fissuration ultérieure de la zone restaurée.

On ne connaissait pas jusqu'ici de procédé de réparation d'une zone défectueuse d'un adaptateur de traversée d'un couvercle de cuve qui permette de restaurer un état de l'adaptateur exempt de défauts et équivalent à l'état neuf.

Le but de l'invention est donc de proposer un procédé de réparation d'une zone défectueuse de la paroi d'un adaptateur de traversée du couvercle de la cuve d'un réacteur nucléaire à eau sous pression, dans laquelle le métal de la paroi présente des défauts tels que des fissures, ce procédé permettant de réaliser une réparation efficace, d'éviter l'apparition de nouvelles fissures lorsque la pièce métallique est remise en service et de pouvoir être mis en oeuvre sans avoir à effectuer des opérations de contrôle nombreuses et précises.

Dans ce but :
- on découpe la manchette thermique de l'adaptateur à réparer par l'un des procédés suivants : usinage par outil de coupe, par jet d'eau, par étincelage,
- on extrait la manchette thermique de l'adaptateur,
- on contrôle la surface intérieure de l'adaptateur par l'un des procédés suivants : courants de Foucault, ultrasons, ressuage, de façon à localiser la zone à réparer,
- on réalise une fusion suivie d'une solidification du métal de la paroi de l'adaptateur, dans la zone défectueuse à l'aide d'une source de chaleur,
- on réalise une mise en compression d'une couche superficielle du métal de la paroi de l'adaptateur, au moins dans la zone défectueuse, après fusion et solidification, par des chocs répétés de particules solides,
- on contrôle par courants de Foucault ou par ultrasons la zone de l'adaptateur qui a été fondue, solidifiée et comprimée, et
- on pose une manchette thermique neuve à l'intérieur de l'adaptateur.

Afin de bien faire comprendre l'invention, on va maintenant décrire, en se référant aux figures jointes en annexe, un mode de réalisation du procédé suivant l'invention de réparation d'un adaptateur traversant le couvercle de la cuve d'un réacteur nucléaire à eau sous pression et les dispositifs permettant la mise en oeuvre de ce procédé.

La figure 1 est une vue en coupe par un plan vertical d'un adaptateur traversant le couvercle de la cuve d'un réacteur nucléaire à eau sous pression.

La figure 2 est une vue en élévation et en coupe par un plan vertical d'un couvercle de cuve en position sur un stand d'intervention, pendant la mise en oeuvre du procédé suivant l'invention.

Les figures 3 et 3A sont des vues en coupe et en élévation d'une partie d'un adaptateur dans lequel est introduit un dispositif de fusion par plasma d'arc transféré permettant de réaliser la première phase du procédé selon l'invention et suivant deux variantes.

La figure 4 est une vue en coupe et en élévation d'une partie d'un adaptateur dans lequel est introduit un dispositif de fusion par faisceau laser permettant de réaliser la première phase du procédé selon l'invention, suivant une troisième variante.

La figure 4A est une vue en coupe suivant A-A de la figure 4.

La figure 5 est une vue en coupe et en élévation d'un adaptateur dans lequel est introduite une torche de soudage TIG pour réaliser la première phase du procédé selon l'invention, suivant une quatrième variante.

La figure 6 est une vue en coupe et en élévation d'un adaptateur traversant le couvercle de la cuve d'un réacteur nucléaire dans lequel est introduit un dispositif de grenaillage pour la mise en oeuvre de la deuxième phase du procédé suivant l'invention.

La figure 7 est une vue en coupe suivant 7-7 de la figure 6.

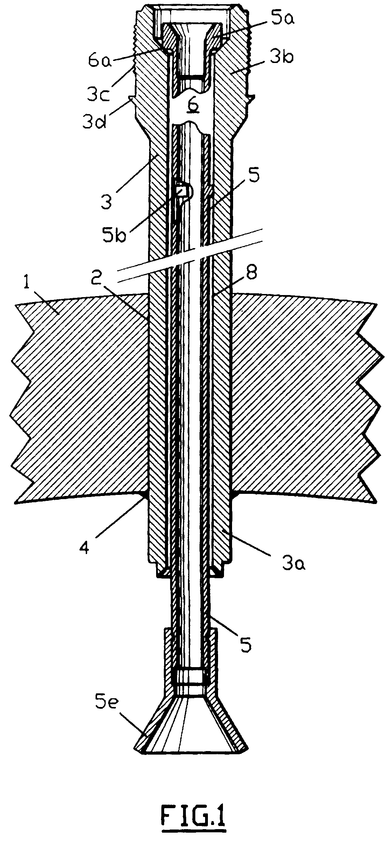

Sur la figure 1, on voit une partie d'un couvercle 1 d'une cuve d'un réacteur nucléaire à eau sous pression qui est traversé par une ouverture 2 à l'intérieur de laquelle est fixée une pièce tubulaire 3 constituant un adaptateur permettant le passage d'un prolongateur assurant le déplacement d'une grappe de contrôle à l'intérieur de la cuve du réacteur nucléaire.

L'adaptateur 3 de forme tubulaire comporte une partie courante 3a dont le diamètre correspond au diamètre de l'ouverture 2 et qui est fixée par un cordon de soudure annulaire 4 sur la face interne inférieure du couvercle 1, de manière à se trouver saillante par rapport à cette face interne inférieure. L'adaptateur 3 comporte une partie supérieure élargie diamétralement 3b située à l'extérieur et au-dessus du couvercle de la cuve 1.

Une manchette thermique 5 de forme tubulaire est disposée coaxialement à l'intérieur de l'alésage interne de l'adaptateur 3.

La manchette thermique 5 comporte une partie supérieure 5a élargie diamétralement venant reposer sur une surface d'appui 6a de forme tronconique constituant la partie supérieure de l'alésage interne 6 de l'adaptateur tubulaire 3.

La manchette 5 comporte de plus sur sa surface externe au moins un ensemble de trois plots 5b en saillie radiale vers l'extérieur disposés à 120° les uns des autres autour de l'axe de la manchette 5 et venant en appui contre la surface intérieure de l'alésage interne 6 de l'adaptateur 3, lorsque la manchette 5 est montée à l'intérieur de l'adaptateur.

La manchette 5 présente un diamètre externe sensiblement inférieur au diamètre intérieur de l'alésage 6, de sorte qu'il subsiste un espace annulaire 8 de largeur constante entre la surface externe de la manchette 5 maintenue dans une position parfaitement coaxiale à l'alésage 6 par les plots 5b et la surface interne de l'alésage 6.

La partie supérieure élargie diamétralement 3b de l'adaptateur 3 comporte sur sa surface externe un filetage 3c et une lèvre 3d en saillie par rapport à la surface externe de la partie 3b.

Le mécanisme de commande de l'adaptateur 3 permettant le déplacement du prolongateur et de la grappe de commande traversant le couvercle à l'intérieur de l'adaptateur est fixé sur la partie supérieure de l'adaptateur 3 par vissage sur la partie filetée 3c et mis en appui sur la lèvre 3d.

La fixation du mécanisme de commande est complétée par un cordon de soudure d'étanchéité assurant la jonction entre le mécanisme et l'adaptateur le long de la lèvre 3d.

La manchette thermique 5 est solidaire à sa partie inférieure, en-dessous du couvercle de cuve et de la partie inférieure de l'adaptateur 3, d'un cône de centrage 5e permettant, lors de la pose du couvercle 1 sur la cuve du réacteur, le centrage des extrémités des tiges de commande de grappes constituant des prolongateurs de ces grappes engagés dans la direction verticale à l'intérieur du coeur du réacteur disposé dans la cuve.

Après un certain temps de fonctionnement du réacteur, il est nécessaire de vérifier l'état des adaptateurs traversant le couvercle de la cuve et en particulier de la partie des adaptateurs au niveau de laquelle est réalisée la fixation sur le couvercle de cuve, par l'intermédiaire d'une soudure annulaire telle que 4.

Ce contrôle visant essentiellement la surface interne de l'alésage 6 de l'adaptateur dans la zone de soudure 4 peut être réalisé, avant ou après démontage de la manchette thermique, en déplaçant une sonde telle qu'une sonde à courants de Foucault suivant la surface intérieure de l'alésage 6 de l'adaptateur. Le contrôle peut être également réalisé en utilisant les ultrasons ou, après démontage de la manchette, en utilisant une technique de contrôle par ressuage.

Lorsque des fissures ont été détectées sur la surface interne d'un ou plusieurs adaptateurs traversant le couvercle de la cuve 1, il est nécessaire de réaliser la réparation de la paroi de l'adaptateur dans la zone défectueuse où ont été décelées les fissures.

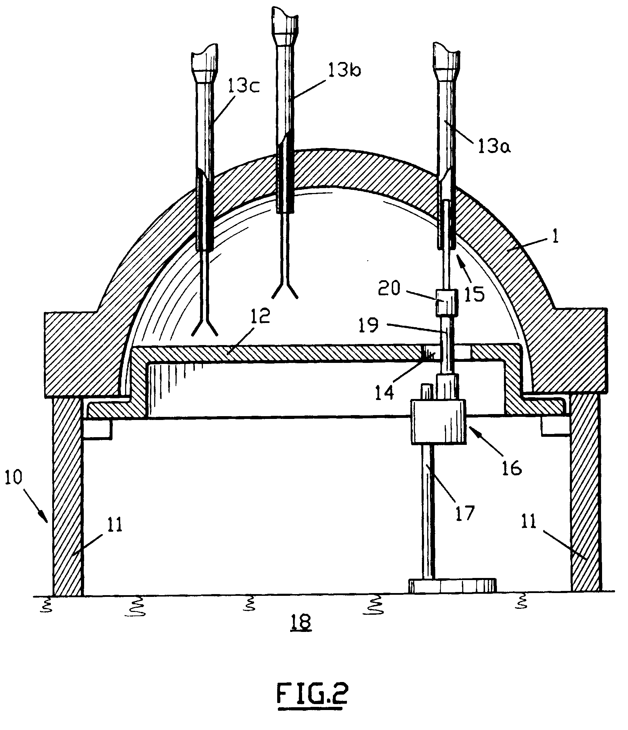

Le contrôle des adaptateurs et les réparations des zones défectueuses éventuellement décelées à l'intérieur de ces adaptateurs peuvent être réalisés sur un stand d'intervention 10 tel que représenté sur la figure 2.

Sur la figure 2, le stand d'intervention qui a été représenté de manière très schématique comporte des supports 11 verticaux sur la partie supérieure desquels le couvercle 1 vient reposer dans une position correspondant à sa position de service sur la cuve du réacteur.

Le stand d'intervention 10 comporte une platine 12 reposant sur une partie des supports 11 ou sur des supports indépendants, de manière à se trouver dans une position horizontale en-dessous des extrémités inférieures des manchettes thermiques des adaptateurs tels que 13b et 13c traversant le couvercle de cuve 1.

De plus, la platine 12 comporte une ouverture traversante 14 qui est placée à l'aplomb d'un adaptateur 13a sur la surface intérieure duquel des défauts ont été décelés et dans lequel on réalise une réparation d'une zone défectueuse, par le procédé suivant l'invention.

La manchette thermique de l'adaptateur 13a a été démontée, soit pour effectuer le contrôle de la surface intérieure de l'adaptateur soit en vue de la réparation par le procédé suivant l'invention. Le démontage de la manchette thermique peut être réalisé par découpage de cette manchette par l'intérieur et extraction par le dessous du couvercle, du tronçon découpé.

Le découpage peut être effectué par l'intérieur de la manchette au moyen d'un outil de coupe, par un jet d'eau sous pression ou par étincelage.

Le contrôle peut être réalisé par courants de Foucault, par ultrasons ou par ressuage.

Dans le cas où l'on effectue le contrôle par courants de Foucault ou par ultrasons, le contrôle peut être éventuellement réalisé sans démontage de la manchette thermique.

La réparation à l'intérieur de l'adaptateur 13a, par le procédé suivant l'invention, est effectuée en utilisant un outil tel que 15 qui est introduit et déplacé à l'intérieur de l'adaptateur, en utilisant un ensemble mécanique de support, de guidage et de déplacement 16 lui-même monté mobile sur une colonne de guidage verticale 17 reposant sur le plancher 18 du poste d'intervention 10.

L'outil de réparation 15 est constitué, pendant la première phase du procédé de réparation suivant l'invention, par un moyen de fusion de la surface intérieure de l'adaptateur qui peut être déplacé simultanément dans la direction axiale de l'adaptateur 13a et en rotation autour de l'axe de l'adaptateur. On peut ainsi réaliser, pendant la première phase du procédé de réparation suivant l'invention, une fusion suivie d'une solidification sur toute la surface défectueuse, en balayant celle-ci suivant un parcours hélicoïdal.

Dans la seconde phase du procédé de réparation suivant l'invention, l'outil de réparation 15 peut être constitué par un outil de grenaillage qui est mis en place dans l'adaptateur 13a au niveau de la zone défectueuse pour réaliser la mise en compression par grenaillage de la surface de la zone défectueuse qui a été préalablement refondue et solidifiée.

La commande des différentes opérations nécessaires pour la mise en oeuvre du procédé suivant l'invention peut être assurée par un opérateur placé dans le poste d'intervention 10, en-dessous de la platine 12, la protection biologique de l'opérateur contre les radiations provenant de la partie inférieure du couvercle 1 étant assurée par la platine 12.

La mise en place de l'outil 15 à l'intérieur de l'adaptateur 13a peut être effectuée par l'opérateur, en utilisant des moyens de guidage et de déplacement de l'ensemble 16 portant l'outillage 15, le long de la colonne de guidage 17.

Pendant l'intervention, le déplacement de l'outil 15 dans la direction axiale, à l'intérieur de l'adaptateur 13a peut être assuré par le dispositif de déplacement 16 portant l'outil 15 par l'intermédiaire d'un mât vertical 19 et d'un support rotatif 20 permettant d'assurer la mise en rotation de l'outil 15 à l'intérieur de l'adaptateur 13a, autour de l'axe de l'adaptateur.

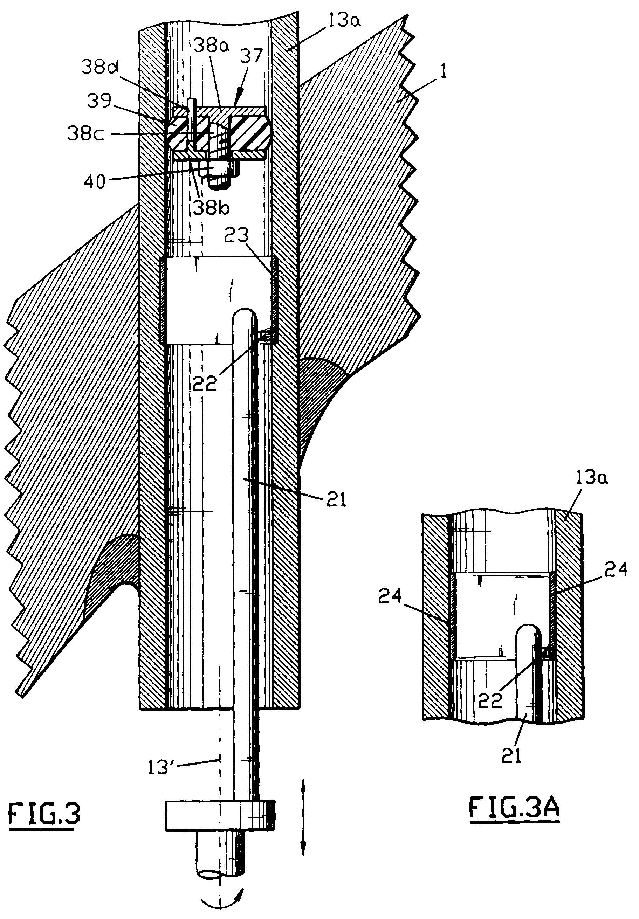

Sur la figure 3, on a représenté l'adaptateur 13a traversant le couvercle de cuve 1 dans lequel est mis en place un outil de refusion et de dépôt de métal par plasma d'arc transféré 21 qui peut être fixé sur un support rotatif tel que le support 20 représenté sur la figure 2, de la même manière que l'outil 15. De cette façon, le dispositif de fusion par plasma d'arc transféré 21 peut être mis en place à l'intérieur de l'adaptateur 13a de manière à réaliser la fusion dans une zone défectueuse et déplacé en translation dans la direction de l'axe de l'adaptateur 13a et en rotation autour de l'axe de l'adaptateur, grâce à des dispositifs tels que le support rotatif 20, les moyens de déplacement 16 et la colonne de guidage 17 représentés sur la figure 2.

La technique de fusion ou de soudage avec ou sans métal d'apport par plasma d'arc tranféré est connue et met en oeuvre une torche comportant une cathode centrale et une anode et un ou plusieurs conduits périphériques. L'électrode est reliée à une source de courant de manière qu'un arc puisse se former entre la cathode et l'anode. Par un conduit périphérique de la torche on envoie un gaz tel que l'argon dans la zone où se forme l'arc appelé arc pilote. Il se forme de ce fait un plasma. Un second arc appelé arc transféré s'établit avec la pièce sur laquelle on effectue la fusion ou le soudage qui est à un potentiel anodique. Cet arc constitue l'élément de chauffage de la pièce. La colonne de plasma au contact de laquelle la pièce est fondue est entourée par du gaz neutre tel que l'argon insufflé par un conduit périphérique de la torche.

Pour réaliser un dépôt de métal sur la pièce, une poudre métallique peut être ajoutée au courant d'argon au voisinage de l'arc.

L'outil de refusion 21 représenté sur la figure 3 est une torche à plasma d'arc transféré utilisée sans addition de poudre métallique. L'arc transféré 22 réalise la refusion d'une couche superficielle 23 de la paroi de l'adaptateur. Un balayage hélicoïdal à vitesse contrôlée de la paroi interne de l'adaptateur permet d'éliminer les défauts de cette paroi dans toutes les zones défectueuses qui ont été détectées.

Il est nécessaire de régler la torche 21 pour réaliser la refusion sur une profondeur bien définie. Les principaux paramètres dont on effectue le réglage sont l'intensité de l'arc transféré, la tension de l'arc transféré qui est fonction de la distance entre la cathode et la pièce, le débit de gaz formant le plasma, la vitesse d'avance de la torche, le débit de gaz de protection, la distance torche-pièce et la position de travail de la torche.

Dans le cas de la refusion de la paroi interne d'un adaptateur en alliage de nickel, on a réalisé la fusion dans des conditions satisfaisantes en mettant en oeuvre un arc transféré d'une intensité de 115 A sous une tension de 19,6 V, la distance entre la torche et la pièce étant de 2 à 2,5 mm, le débit de l'argon formant le plasma de 1,5 l/min, la vitesse de la torche de 10 cm/min et le débit de gaz de protection de 10 l/min. On réalise ainsi des cordons de métal refondu de 7,3 mm de large sur une profondeur de pénétration de 1,5 mm. En augmentant la puissance de la torche on a également réalisé des refusions sur une profondeur de 3 à 4 mm.

Comme il est visible sur la figure 3A, il est possible également d'utiliser la torche à plasma d'arc transféré 21 pour déposer une couche de revêtement métallique 24 sur la surface interne d'un adaptateur 13a présentant des défauts.

Ce résultat est obtenu en injectant une poudre par exemple d'alliage de nickel dans le gaz plasmagène au voisinage de l'arc.

L'arc transféré 22 réalise le dépôt des particules de métal fondu sur la paroi interne de l'adaptateur en même temps qu'un certain chauffage et une certaine fusion de la paroi de l'adaptateur qui sont favorables pour l'accrochage de la couche 24. Les défauts de la paroi de l'adaptateur sont ainsi revêtus par une couche de métal 24 sans défauts et d'épaisseur bien contrôlée.

Le dispositif de refusion comporte de plus un bouchon expansible 37 comportant deux plaques de serrage 38a et 38b et une rondelle en néoprène 39. La plaquette de serrage 38a est solidaire à sa partie centrale d'une tige filetée 38c passant dans une ouverture centrale de la plaquette de serrage 38b et sur laquelle est engagé un écrou de serrage 40.

La plaquette 38b comporte des tiges de guidage telles que 38d passant dans des ouvertures de la plaquette 38a.

Le bouchon 37 est mis en place dans l'adaptateur 13a à l'état non-expansé, avant la mise en place du dispositif de fusion 21. La mise en place est effectuée par l'opérateur en utilisant une perche comportant une clé de serrage permettant de réaliser l'expansion radiale de la rondelle de néoprène 39 par serrage de l'écrou 40, lorsque le bouchon 37 est en place dans l'adaptateur 13a.

Le dispositif de fusion par plasma à arc transféré 21 est ensuite mis en place à l'intérieur de l'adaptateur 13a, en-dessous du bouchon expansible 37 qui est lui-même fixé à l'intérieur de l'adaptateur 13a, dans une zone voisine du niveau supérieur du couvercle 1.

Comme il est visible sur la figure 3, la torche 21 est fixée de manière décalée par rapport à l'axe 13' commun à l'adaptateur 13a et au support rotatif 20 de la torche, permettant son déplacement en rotation et en translation axiale à l'intérieur de l'adaptateur. On réalise ainsi un balayage de la surface intérieure de l'adaptateur par l'arc transféré.

On peut également utiliser, au lieu d'une torche 21 parallèle à l'axe 13' de l'adaptateur, une torche placée dans une direction inclinée par rapport à l'axe 13' qui est mise en rotation avec le support rotatif pour réaliser le balayage de la surface intérieure de l'adaptateur.

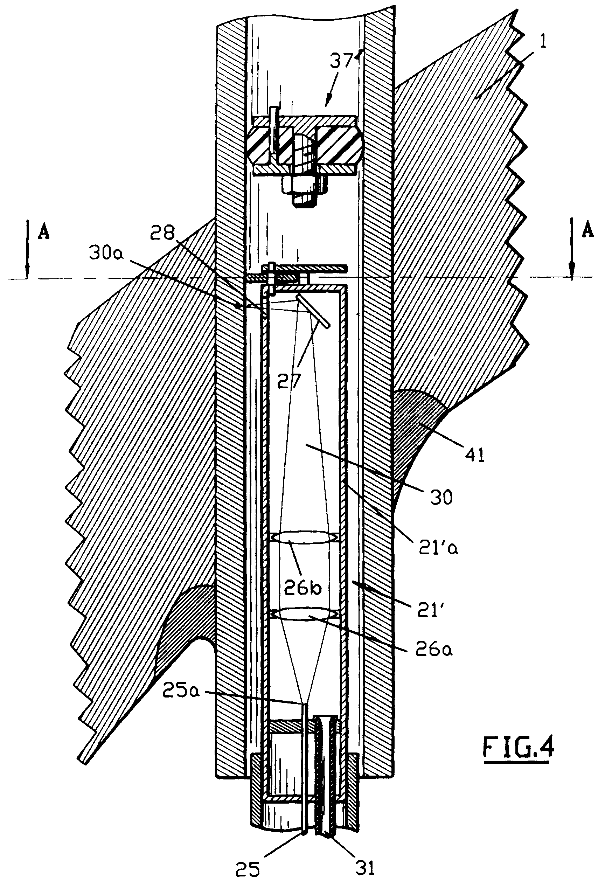

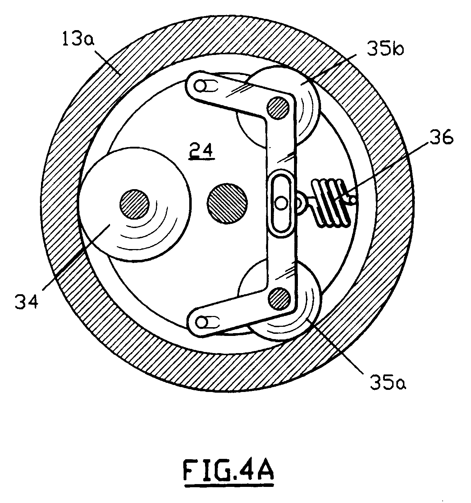

Comme représenté sur la figure 4, on peut utiliser pour réaliser la refusion de la surface intérieure de l'adaptateur 13a, au lieu d'une torche à plasma d'arc transféré comme décrit plus haut, un outil de fusion par faisceau laser 21'.

L'outil de fusion 21' comporte une enveloppe constituant un boîtier 21'a dans lequel sont disposés les composants optiques du dispositif de fusion par faisceau laser. Ces composants optiques comportent une fibre optique 25 dirigée suivant l'axe du boîtier 21'a, des lentilles 26a et 26b disposées en position centrée sur l'axe du boîtier et un miroir 27 placé dans une position inclinée par rapport à l'axe du boîtier 21'a.

Le boîtier 21'a comporte une fenêtre de sortie 28 dans la partie supérieure de sa paroi latérale.

La fibre optique 25 comporte une extrémité de sortie 25a à l'intérieur du boîtier 21'a et une extrémité d'entrée non représentée reliée à un générateur de rayonnement laser.

L'extrémité de sortie 25a de la fibre 25 est disposée au voisinage du foyer de la lentille 26a qui assure la formation d'un faisceau parallèle qui est dirigé sur la lentille 26b. Le faisceau parallèle rendu convergent par la lentille 26b est réfléchi par le miroir 27 en direction de l'ouverture 28 et de la paroi intérieure de l'adaptateur 13a.

Le faisceau laser 30 constitue une tache focale 30a à une profondeur qui peut être parfaitement réglée, sous la surface intérieure de l'adaptateur 13a.

On peut ainsi réaliser une fusion du métal de la paroi de l'adaptateur 13a sur une profondeur parfaitement déterminée en réglant la position de la tache focale 30a, par exemple en déplaçant la lentille 26b par rapport à la lentille 26a ou en réglant les paramètres puissance du laser et vitesse de déplacement du faisceau laser par rapport à la paroi.

La paroi d'extrémité inférieure du boîtier 21'a est traversée par une conduite 31 reliée à une source de gaz neutre tel que de l'argon, de manière à pouvoir réaliser un balayage du volume intérieur du boîtier et de la zone de fusion de la paroi de l'adaptateur 13a. On assure ainsi la protection des éléments optiques disposés dans le boîtier 21'a et l'évacuation des fumées de la zone de fusion ainsi que le refroidissement de la tête de travail.

Sur la paroi d'extrémité supérieure du boîtier 21'a, sont montés des moyens de guidage constitués par des galets qui sont visibles en particulier sur la figure 4. Ces moyens de guidage permettent de maintenir un écartement fixe entre le boîtier 21'a et la paroi intérieure de l'adaptateur 13a et d'assurer une focalisation du faisceau 30 suivant la tache focale 30a à une distance constante de la surface intérieure de l'adaptateur 13a.

Les moyens de guidage comportent un galet suiveur 34 du côté du boîtier 21'a où se trouve l'ouverture 28, deux galets presseurs 35a et 35b situés du côté opposé à l'ouverture 28 et un ressort 36 de mise en appui des galets presseurs 35a et 35b sur la surface intérieure de l'adaptateur 13a, lorsque le boîtier 21'a du dispositif de fusion par laser 21' est introduit à l'intérieur de l'adaptateur 13a.

Un bouchon expansible 37' identique au bouchon 37 décrit plus haut en ce qui concerne le dispositif de refusion par plasma d'arc transféré peut être mis en place dans le tube avant l'introduction de l'outil de fusion par laser.

Comme il a été indiqué plus haut, la fibre 25 est alimentée en un rayonnement laser dont on assure la focalisation à une profondeur bien déterminée en-dessous de la surface intérieure de l'adaptateur 13a.

Le boîtier 21'a du dispositif de fusion par laser 21 est alors déplacé en translation dans la direction de l'axe de l'adaptateur 13a et, simultanément, en rotation autour de cet axe.

Le galet suiveur 34 fixé sur la partie supérieure du boîtier 21'a du côté de l'ouverture 28 assure le maintien de la tache focale 30a du faisceau laser 30 à une profondeur bien déterminée en-dessous de la surface intérieure de l'adaptateur 13a, pendant les déplacements en translation et en rotation, c'est-à-dire suivant un parcours hélicoïdal du boîtier 21'a et du faisceau laser 30.

On réalise ainsi une fusion du métal de la paroi de l'adaptateur 13a sur une profondeur bien déterminée suivant une zone hélicoïdale balayée par le faisceau laser 30 pendant le déplacement du boîtier 21'a à l'intérieur de l'adaptateur 13a.

Le déplacement axial du boîtier 21'a à l'intérieur de l'adaptateur 13a est tel qu'on réalise le balayage de la surface intérieure de l'adaptateur 13a, dans une zone recouvrant largement la zone considérée comme défectueuse, dans laquelle des fissures ont été décelées.

En particulier, dans la zone de l'adaptateur située en vis-à-vis de la soudure 41 sur le couvercle de cuve 1, des fissures sont plus fréquemment décelées que dans les autres zones, de sorte que le balayage de la surface intérieure de l'adaptateur est réalisé généralement jusqu'à une zone inférieure de l'adaptateur située en-dessous de la soudure 41.

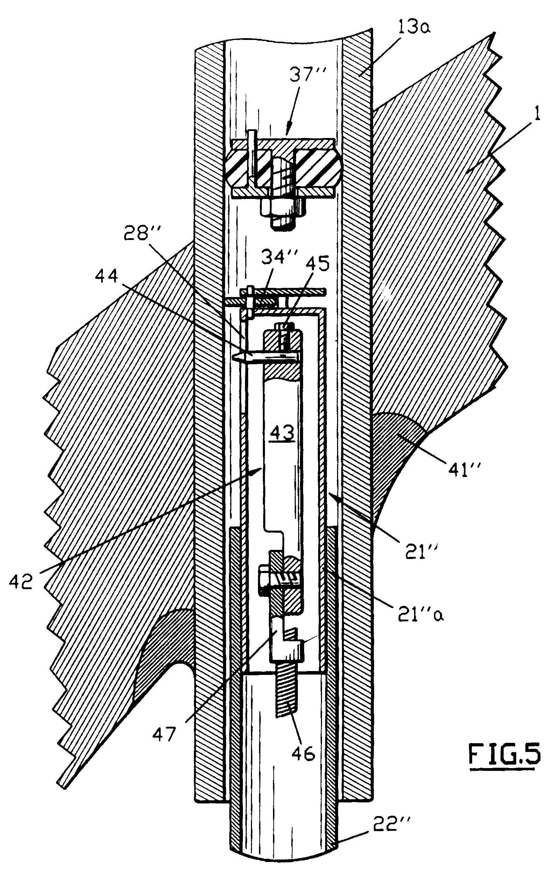

Sur la figure 5, on a représenté une variante de réalisation des moyens permettant de réaliser la fusion du métal de la paroi d'un adaptateur 13a, sur une épaisseur déterminée, dans une zone considérée comme défectueuse.

Le dispositif 21'' représenté sur la figure 5 destiné à effectuer la refusion de la paroi de l'adaptateur 13a comporte une enveloppe constituant un boîtier 21''a relié à un prolongateur tubulaire 22'' par l'intermédiaire duquel sont assurés la mise en place et le déplacement du dispositif de fusion 21'' à l'intérieur de l'adaptateur 13a. Cette mise en place et ces déplacements sont commandés comme précédemment par un opérateur placé sur le stand d'intervention, en-dessous de la platine 12.

A l'intérieur du boîtier 21''a, est fixée une torche de soudage TIG 42 comportant un support d'électrode 43, une électrode de tungstène 44 fixée par une vis 45 sur le support 42 et un câble 46 d'alimentation du support d'électrode 43 en courant électrique à forte intensité connecté au support 43, par l'intermédiaire d'une cosse 47 dans laquelle est engagée une vis.

Le boîtier 21''a comporte une fenêtre 28'' en face de l'électrode 44 de direction radiale par rapport au boîtier 21''a et à l'adaptateur 13a.

Un gaz inerte constitué par de l'argon est insufflé à l'intérieur du prolongateur 22'' et du boîtier 21''a, de manière à assurer le balayage de la zone en cours de fusion, au niveau de la pointe de l'électrode 44, à travers la fenêtre 28'' et à refroidir la tête de soudage.

La distance de la pointe de l'électrode 44 à la surface intérieure de l'adaptateur 13a est réglée de manière que la paroi de l'adaptateur 13a soit fondue par l'électrode alimentée en courant électrique sur une profondeur bien déterminée.

Un galet suiveur 34'' permet de maintenir à une valeur fixe parfaitement déterminée la distance entre la pointe de l'électrode 44 et la surface intérieure de l'adaptateur 13a, pendant les déplacements du dispositif de fusion 31''.

Préalablement à l'introduction du dispositif 21'' dans l'adaptateur 13a, on met en place un bouchon 37'' sensiblement analogue au bouchon 37 décrit plus haut, dans une zone de l'adaptateur 13a située au niveau de la surface supérieure du couvercle 1.

Le bouchon 37'', comme le bouchon 37, permet d'éviter l'entraînement des fumées de la zone de fusion, par le courant de gaz inerte, dans la partie supérieure de l'adaptateur.

Dans le cas d'un adaptateur ayant une épaisseur de paroi de l'ordre de 15 mm, on réalise une fusion du métal de la paroi de l'adaptateur dans la zone défectueuse, sur une profondeur de l'ordre de 3 mm. On réalise donc le réglage des paramètres de la torche de fusion par plasma à arc transféré ou de la focalisation ainsi que des paramètres puissance et vitesse de déplacement du faisceau laser ou encore le réglage de l'électrode TIG, de manière à assurer une fusion sur une profondeur constante de 3 mm, pendant le déplacement du dispositif de fusion.

Le déplacement vers le bas du dispositif de fusion tel que 21, 21'ou 21'', à l'intérieur de l'adaptateur tel que 13a, est poursuivi jusqu'au moment où l'on a réalisé la fusion de la partie inférieure de l'adaptateur en-dessous de la zone de soudure 41.

Le métal de la paroi de l'adaptateur 13a qui a été fondu puis solidifié est sensiblement exempt de défauts tels que des fissures, du fait que les fissures existant dans la zone défectueuse se referment lors de la mise en fusion du métal.

Cependant, l'élévation de température du métal dans la zone fondue puis solidifiée entraîne la formation de contraintes dans la paroi de l'adaptateur, en particulier, dans les zones de transition entre la partie soumise à la fusion et la partie qui n'a pas été soumise à la fusion de la paroi de l'adaptateur.

Il est également possible de réaliser le dépôt d'un métal d'apport avec la torche TIG, pour recouvrir la zone défectueuse. Dans ce cas également, l'état de contrainte du métal déposé n'est pas favorable pour assurer une bonne tenue à la corrosion.

De manière générale, après refusion ou dépôt de métal d'apport, les couches superficielles internes de la paroi de l'adaptateur sont dans un état de contraintes qui n'est pas favorable pour assurer une bonne résistance à la corrosion, dans les conditions de fonctionnement de la cuve du réacteur nucléaire.

Il est connu, dans le cas de pièces telles que des pièces tubulaires venant en contact avec un fluide sous haute pression et à haute température, d'améliorer la résistance à la corrosion sous tension de ces pièces, en créant un état de contrainte favorable dans la paroi ou peau interne des pièces venant en contact avec le milieu à haute température.

On a déjà proposé, par exemple dans le cas de tubes de générateur de vapeur en alliage de nickel, de créer des contraintes de compression dans la peau interne de ces tubes, en particulier dans la zone de transition entre la zone déformée par expansion et dudgeonnage dans la plaque tubulaire et la zone non déformée des tubes.

Cette mise en compression de la surface interne des tubes pour améliorer leur tenue à la corrosion peut être réalisée en particulier par une opération de martelage ou grenaillage par des particules en un matériau de dureté supérieure à la dureté de l'alliage des tubes.

Un tel procédé a été décrit par exemple dans le brevet français 2.572.965 déposé par la Société FRAMATOME.

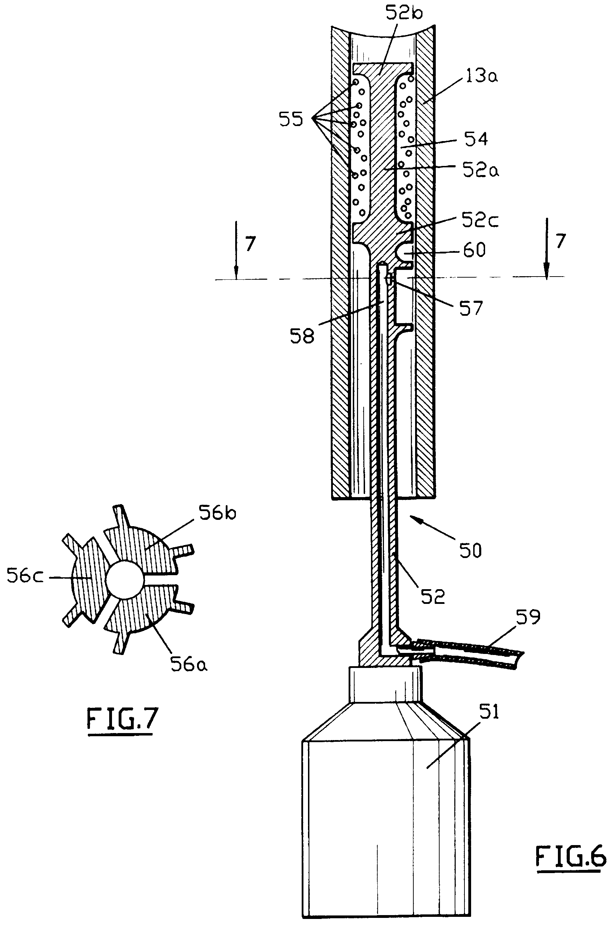

Sur la figure 6, on a représenté un adaptateur tel que l'adaptateur 13a qui a été soumis à une opération de fusion d'une couche interne de sa paroi, de la manière décrite plus haut.

Après avoir réalisé la fusion et la solidification d'une couche interne de l'adaptateur 13a, on réalise une mise en compression de la peau interne de l'adaptateur par martelage ou grenaillage par des particules solides, en utilisant l'outillage 50 représenté sur la figure 6 dans une position de service à l'intérieur de l'adaptateur.

L'outil 50 est constitué par un excitateur 51 qui comporte une partie vibrante reliée à une tige 52 de forme allongée constituant un élément concentrateur et résonateur qui peut être mis en vibration par l'excitateur 51 qui est relié à un générateur d'impulsions magnétiques alimenté à une haute fréquence, par exemple de l'ordre de 20.000 Hz.

La tige du résonateur 52 de forme sensiblement cylindrique comporte une partie supérieure 52a limitée extérieurement par une surface symétrique de révolution dont la méridienne est représentée sur la figure 6.

La partie 52a qui présente une forme de bobine ou de diabolo est limitée par deux parties élargies 52b et 52c à section circulaire de la tige 52, dont le diamètre est légèrement inférieur au diamètre intérieur de l'adaptateur 13a.

La partie en forme de diabolo 52a, 52b, 52c de la tige 52, lorsque la tige 52 est introduite dans l'adaptateur 13a, suivant sa direction axiale comme représenté sur la figure 6, délimite avec la surface interne de l'adaptateur 13a, un espace annulaire 54 dans lequel des billes 55 destinées à assurer le martelage et la mise en compression de la peau interne de l'adaptateur 13a peuvent être mises en mouvement, lorsque la tige 52 est en vibration.

Comme il est visible sur les figures 6 et 7, la tige 52 présente trois parties 56a, 56b et 56c disposées à 120° autour de l'axe de la tige 52 constituant, en-dessous de la partie élargie diamétralement inférieure 52c, trois patins de centrage à coussin d'air comportant des lèvres venant à proximité de la surface intérieure de l'adaptateur, lorsque la tige 52 est introduite en position coaxiale à l'intérieur de l'adaptateur.

Les patins de centrage 56a, 56b et 56c sont alimentés en air, chacun par l'intermédiaire d'un diaphragme tel que 57 communiquant avec un canal central 58 de la tige 52 disposé suivant l'axe de cette tige.

Le canal 58 est alimenté en air comprimé par une conduite 59 reliée à un ajutage communiquant avec le canal 58, à la partie inférieure de la tige 52.

Au-dessus des patins à coussin d'air, la tige 52 comporte des rainures 60 de récupération d'air permettant d'éviter une entrée d'air dans la chambre annulaire 54 qui sera désignée par la suite comme chambre de billage.

Pour réaliser la mise en compression par grenaillage ou billage d'une couche interne de la paroi de l'adaptateur 13a, dans la zone de la surface interne de l'adaptateur qui a été soumise à la fusion suivie d'une solidification, l'outillage 50 est fixé sur un support tel que le support 16 représenté sur la figure 2 qui permet de réaliser l'introduction de la tige 52 de l'outillage 50 à l'intérieur de l'adaptateur, dans une disposition parfaitement coaxiale.

Des billes, par exemple des billes d'acier, sont introduites entre l'adaptateur et la tige 52, au-dessus de la partie élargie 52c, au moment de l'introduction de la tige 52 dans l'alésage de l'adaptateur 13a.

On introduit la tige 52 à l'intérieur de l'adaptateur 13a, jusqu'au moment où la chambre de billage 54 se trouve au-dessus de la zone dont on a réalisé la fusion précédemment.

On alimente les patins de centrage 56a, 56b et 56c en air comprimé, par l'intermédiaire de la conduite 59, de manière à réaliser le centrage du diabolo 52a de la tige 52 à l'intérieur de l'adaptateur, sans aucun contact avec la paroi intérieure de l'adaptateur.

On alimente l'excitateur 51, de manière à mettre la tige 52 en vibration.

Les vibrations de la tige 52 assurent la mise en mouvement des billes 55 à l'intérieur de la chambre de billage 54.

Les billes 55 viennent frapper la paroi interne de l'adaptateur 13a, soit directement, soit par renvoi élastique, après avoir frappé la surface extérieure du diabolo 52a ou d'autres billes.

On réalise ainsi une mise en compression d'une couche superficielle interne de l'adaptateur 13a appelée peau interne, du fait du choc répété des billes 55 sur la paroi intérieure de l'adaptateur.

L'énergie et la fréquence de vibration, le diamètre et le nombre de billes ainsi que les caractéristiques propres de la tige 52 et du matériau dont sont constituées les billes permettent de réaliser une mise en compression de la peau interne de l'adaptateur sur une profondeur qui peut atteindre 0,5 mm.

La couche dont on assure la compression peut bien sûr présenter une épaisseur et des caractéristiques variables, de manière à obtenir une tenue optimale à la corrosion sous tension, dans l'ambiance de la cuve du réacteur nucléaire.

L'outillage de mise en compression 50 est déplacé dans la direction verticale, à une vitesse constante et relativement lente, en utilisant un dispositif de déplacement tel que le dispositif 16 représenté sur la figure 2 ou en déplaçant ce dispositif le long de la colonne de guidage 17.

L'amplitude du déplacement dans la direction verticale de la tige 52 et de la chambre de billage 54 est telle que la mise en compression par billage de la surface intérieure de l'adaptateur 13a soit réalisée dans une zone recouvrant complètement la zone dans laquelle ont été réalisées précédemment la fusion et la solidification d'une couche superficielle.

On élimine ainsi la tendance à la fissuration et à la corrosion de la surface intérieure de l'adaptateur 13a dans les zones traitées.

Dans le cas d'un adaptateur de traversée du couvercle de la cuve d'un réacteur nucléaire à eau sous pression, en un alliage de nickel tel que l'alliage 600, on peut utiliser, pour réaliser la mise en compression par billage de la surface intérieure de la paroi de l'adaptateur, après avoir réalisé une fusion sur une profondeur de l'ordre de 3 mm de cette paroi, des billes d'acier dont le diamètre est voisin de 5 mm.

La tige vibrante du résonateur 52 comporte des parties élargies 52b et 52c dont le diamètre est légèrement inférieur au diamètre intérieur de l'adaptateur 13a, de manière qu'il subsiste, autour des parties élargies 52b et 52c de la tige 52 en position centrée à l'intérieur de l'adaptateur 13a, un jeu de l'ordre de 2mm.

La chambre de billage est ainsi partiellement fermée de manière à éviter toute sortie de billes 55 et la tige 52 est parfaitement isolée de l'adaptateur 13a, si bien que cette tige 52 peut vibrer librement à l'intérieur de l'adaptateur.

Dans le cas où la tige 52 viendrait en contact avec la paroi intérieure de l'adaptateur 13a, les vibrations de la tige 52 seraient absorbées et amorties et la surface intérieure de l'adaptateur 13a risquerait d'être rayée ou détériorée par les surfaces externes des parties 52b et 52c de la tige 52.

L'opération de billage est poursuivie en déplaçant la tige vibrante 52 à l'intérieur de l'adaptateur, soit de manière continue soit par zones successives, jusqu'au moment où la chambre de billage parvient dans la partie inférieure de l'adaptateur, en-dessous des zones de soudure.

L'adaptateur présente alors une peau interne exempte de fissures et qui est mise en compression, de sorte que la surface intérieure de l'adaptateur est susceptible de résister à la fissuration et à la corrosion dans l'ambiance de la cuve du réacteur nucléaire.

On effectue alors un contrôle de la surface intérieure de l'adaptateur, par exemple par courants de Foucault ou par ultrasons. On fixe une manchette thermique neuve qui peut être soudée ou démontable par des opérations ultérieures de réparation, à l'intérieur de l'adaptateur. On effectue de la manière qui vient d'être décrite des opérations de réparation sur tous les adaptateurs présentant des défauts.

A l'issue de ces opérations, le couvercle peut être remis en service.

Le procédé suivant l'invention permet donc de réaliser la réparation de la surface intérieure de la paroi de l'adaptateur, de manière que cette surface intérieure soit exempte de fissures débouchantes et présente un état de compression favorable à une bonne tenue à la fissuration et à la corrosion.

L'invention ne se limite pas aux modes de réalisation qui ont été décrits.

C'est ainsi qu'on peut utiliser des dispositifs permettant d'effectuer la refusion d'une couche interne de la paroi d'une pièce tubulaire, différents des dispositifs à plasma d'arc transféré, à faisceau laser ou à électrode TIG qui ont été décrits plus haut.

On peut également utiliser des dispositifs différents de l'outillage de billage qui a été décrit plus haut pour réaliser la mise en compression par des chocs répétés de particules sur la surface intérieure de l'adaptateur.

On peut par exemple utiliser un procédé et un dispositif de mise en compression par grenaillage tel que décrit dans le brevet français 2.572.965 de la Société FRAMATOME. Il est bien sûr nécessaire d'adapter le procédé et le dispositif, dans le cas où la pièce tubulaire sur laquelle on réalise la mise en compression est différente d'un tube de générateur de vapeur. Dans le cas d'un adaptateur ou d'une manchette de traversée du fond de cuve assurant le passage d'un conduit d'instrumentation, ces pièces étant en alliage de nickel tel que l'alliage 600, le procédé et le dispositif utilisés dans le cas des tubes de générateur de vapeur peuvent être aisément adaptés, pour réaliser une opération de compression dans des conditions satisfaisantes.

Dans le cas d'une pièce tubulaire, on peut également utiliser un dispositif de martelage par des particules de matériau dur fixées à l'extrémité de lamelles souples solidaires d'un axe qui est mis en rotation à très grande vitesse à l'intérieur de la pièce tubulaire. Sous l'effet de la rotation et des forces centrifuges, les particules viennent frapper la surface intérieure de la pièce tubulaire. Cette technique est généralement désignée par le terme "rotopeening".

L'invention s'applique non seulement au cas des adaptateurs mais également aux manchettes de traversée ou encore au cas d'autres pièces tubulaires fixées sur la cuve ou dans toute autre partie primaire d'un réacteur nucléaire à eau sous pression.

## Revendications

1. Procédé de réparation d'une zone défectueuse de la paroi d'un adaptateur de traversée (13a) du couvercle de la cuve d'un réacteur nucléaire à eau pressurisée dans lequel est disposée une manchette thermique, le métal de la paroi présentant des défauts tels que des fissures dans la zone défectueuse, caractérisé par le fait :
- qu'on découpe la manchette thermique de l'adaptateur (13a) à réparer par l'un des procédés suivants : usinage par outil de coupe, par jet d'eau, par étincelage,
- qu'on extrait la manchette thermique de l'adaptateur (13a),
- qu'on contrôle la surface intérieure de l'adaptateur (13a) par l'un des procédés suivants : courants de Foucault, ultrasons, ressuage, de façon à localiser la zone défectueuse à réparer,
- qu'on réalise une fusion suivie d'une solidification du métal de la paroi de l'adaptateur (13a), dans la zone défectueuse à l'aide d'une source de chaleur (21, 21', 21''),
- qu'on réalise une mise en compression d'une couche superficielle du métal de la paroi de l'adaptateur (13a), au moins dans la zone défectueuse, après fusion et solidification, par des chocs répétés de particules solides (55),
- qu'on contrôle par courants de Foucault ou par ultrasons la zone de l'adaptateur (13a) qui a été fondue, solidifiée et comprimée, et
- qu'on pose une manchette thermique neuve à l'intérieur de l'adaptateur (13a).

2. Procédé suivant la revendication 1, caractérisé par le fait que la fusion est réalisée par un plasma d'arc transféré avec insufflation d'un gaz inerte tel que l'argon dans une zone de formation d'un arc entre une électrode et la pièce (13a).

3. Procédé suivant la revendication 2, caractérisé par le fait qu'une poudre métallique est insufflée dans la zone de formation de l'arc afin de déposer une couche de métal (24) sur la surface de la pièce (13a).

4. Procédé suivant la revendication 1, caractérisé par le fait que la fusion est réalisée par une source de chaleur constituée par un faisceau laser (30).

5. Procédé suivant la revendication 4, caractérisé par le fait que le faisceau laser (30) est focalisé pendant la fusion, de manière à constituer une tache focale (30a) à une profondeur constante à l'intérieur de la paroi de la pièce métallique (13a).

6. Procédé suivant la revendication 1, caractérisé par le fait que la fusion est réalisée par un courant électrique amené à une électrode (44) qui est déplacée au voisinage de la surface de la zone défectueuse de la paroi de l'adaptateur (13a).

7. Procédé suivant l'une quelconque des revendications 4, 5 et 6, caractérisé par le fait qu'un gaz inerte tel que de l'argon est insufflé sur la surface de la zone défectueuse, pendant la fusion.

8. Procédé suivant la revendication 1, caractérisé par le fait que les particules solides réalisant la mise en compression d'une couche superficielle du métal de la paroi (13a) par des chocs répétés sont des billes (55) mises en mouvement, au voisinage de la surface de la paroi (13a) par une pièce vibrante (52).

9. Procédé suivant l'une quelconque des revendications 1 à 8, caractérisé par le fait que l'adaptateur de traversée (13a) est en alliage de nickel et présente une épaisseur de paroi de l'ordre de 15 mm et que la fusion de la paroi de l'adaptateur (13a, 13'a) est réalisée sur une épaisseur de l'ordre de 3 mm.

10. Procédé suivant la revendication 9, caractérisé par le fait que la mise en compression de la surface intérieure de l'adaptateur (13a) en alliage de nickel est réalisée par des chocs répétés de billes en acier ayant un diamètre voisin de 5 mm et mises en mouvement par une tige vibrante (52) introduite à l'intérieur de l'adaptateur (13a) reliée à un excitateur alimenté par un courant à haute fréquence.

11. Dispositif de réparation d'une zone défectueuse de la surface intérieure d'un adaptateur de traversée (13a) du couvercle de la cuve d'un réacteur nucléaire, caractérisé par le fait qu'il comporte :
- un dispositif de fusion (21, 21', 21'') de forme générale tubulaire dont le diamètre est inférieur au diamètre intérieur de l'adaptateur (13a),
- un outillage (50) de mise en compression de la surface intérieure de l'adaptateur (13a) par chocs répétés de particules (55) comportant au moins une partie (52) qui peut être introduite dans l'adaptateur (13a),
- éventuellement, un bouchon amovible (37, 37',37'') de fermeture de l'adaptateur (13a),
- et des moyens (16, 17) de déplacement du dispositif de fusion (21, 21', 21'') et de l'outillage (50) de mise en compression dans la direction axiale de l'adaptateur (13a).

12. Dispositif suivant la revendication 12, caractérisé par le fait qu'il comporte de plus des moyens (16) de déplacement en rotation du dispositif de fusion (21, 21, 21''') à l'intérieur de l'adaptateur (13a), autour de l'axe de la pièce tubulaire (13a).

13. Dispositif suivant l'une quelconque des revendications 11 et 12, caractérisé par le fait que le dispositif de fusion (21) est une torche de soudage par plasma à arc transféré comportant une électrode et au moins deux conduits à disposition périphérique autour de l'électrode reliés à une source de gaz inerte.

14. Dispositif suivant l'une quelconque des revendications 13 et 14, caractérisé par le fait que le dispositif de fusion (21') est un dispositif de fusion par faisceau laser (30) comportant, à l'intérieur d'une enveloppe (21'a), une partie d'extrémité de sortie (25a) d'une fibre optique (25), des moyens optiques (26a, 26b ; 27) de focalisation et d'orientation d'un faisceau laser (30) parvenant dans l'enveloppe (21'a) par la fibre (25), de manière à diriger le faisceau (30) vers la surface intérieure de l'adaptateur (13a) et à focaliser le faisceau (30) à l'intérieur de la paroi de l'adaptateur (13a),
- ainsi que des moyens (34) de guidage de l'enveloppe (21'a) à l'intérieur de l'adaptateur (13a) maintenant un écartement constant entre l'enveloppe (21'a) et la paroi intérieure de l'adaptateur (13a).

15. Dispositif suivant la revendication 14, caractérisé par le fait que le dispositif (21') comporte un conduit (31) d'alimentation du volume intérieur de l'enveloppe (21'a) en un gaz inerte.

16. Dispositif suivant l'une quelconque des revendications 11 à 15, caractérisé par le fait que l'outillage (50) de mise en compression de la surface intérieure de l'adaptateur (13a) par des chocs répétés de billes (55) comporte un excitateur (51) relié à une source de courant à haute fréquence et comportant une partie vibrante ainsi qu'une tige vibrante (52) reliée à la partie vibrante de l'excitateur (51) comportant une partie d'extrémité (52a) ayant une surface extérieure concave symétrique de révolution autour de l'axe de la tige (52) délimitée par deux parties (52b, 52c) à section circulaire élargie diamétralement dont le diamètre est inférieur au diamètre intérieur de la pièce tubulaire (13a) et des moyens de centrage (56a, 56b, 56c) de la tige (52) en position coaxiale à l'intérieur de l'adaptateur (13a).

17. Dispositif suivant la revendication 16, caractérisé par le fait que les moyens de centrage (56a, 56b, 56c) de la tige (52) sont constitués par des patins à coussin d'air alimentés en air comprimé par un canal (58) dans une disposition axiale à l'intérieur de la tige (52).

18. Dispositif suivant la revendication 17, caractérisé par le fait que la tige (52) comporte au moins une rainure (60) entre la partie d'extrémité (52a) délimitant une chambre de billage (54) et les patins de centrage à coussin d'air (56a, 56b, 56c) de manière à récupérer l'air introduit dans les patins à coussin d'air.

## Claims

1. Process for repairing a defective zone in the wall of a penetration adapter (13a) of the cover of the vessel of a pressurised water nuclear reactor in which a thermal sleeve is arranged, the metal of the wall having defects such as cracks in the defective zone, characterised in that:
- the thermal sleeve of the adapter (13a) to be repaired is cut by one of the following processes: machining with a cutting tool, a water jet or by electrical discharge;
- the thermal sleeve is removed from the adapter (13a);
- the internal surface of the adapter (13a) is checked by one of the following processes: eddy currents, ultrasound, sweating, in order to locate the defective zone to be repaired;
- the metal of the wall of the adapter (13a) is melted and then solidified in the defective zone using a source of heat (21, 21', 21'');
- a surface layer of the metal of the wall of the adapter (13a) is compressed, at least in the defective zone, after melting and solidification, by repeated impact with solid particles (55);
- the zone of the adapter (13a) which has been melted, solidified and compressed is checked by eddy currents or by ultrasound; and
- a new thermal sleeve is placed inside the adapter (13a).

2. Process according to Claim 1,
characterised in that the melting is effected by a transferred plasma arc while blowing an inert gas, such as argon, into an arc formation zone between an electrode and the piece (13a).

3. Process according to Claim 2,
characterised in that a metallic powder is blown into the arc formation zone in order to deposit a layer of metal (24) on the surface of the piece (13a).

4. Process according to Claim 1,
characterized in that the melting is effected by a source of heat formed by a laser beam (30).

5. Process according to Claim 4,
characterized in that the laser beam (30) is focused during melting in such a manner as to constitute a focal spot (30a) at a constant depth inside the wall of the metallic piece (13a).

6. Process according to Claim 1,
characterised in that the melting is effected by an electric current conveyed to an electrode (44) which is displaced in the vicinity of the surface of the defective zone of the wall of the adapter (13a).

7. Process according to any one of Claims 4,
5 and 6, characterised in that an inert gas, such as argon, is blown onto the surface of the defective zone during the melting operation.

8. Process according to Claim 1,
characterised in that the solid particles effecting the compression of a surface layer of the metal of the wall (13a) by repeated impact are balls (55) which are caused to move, in the vicinity of the surface of the wall (13a), by a vibrating member (52).

9. Process according to any one of Claims 1
to 8, characterised in that the penetration adapter (13a) is produced from a nickel alloy and has a wall thickness of the order of 15 mm and in that the melting of the wall of the adapter (13a, 13'a) is effected to a thickness of the order of 3 mm.

10. Process according to Claim 9,
characterised in that the compression of the internal surface of the adapter (13a) produced from a nickel alloy is effected by repeated impact of steel balls which have a diameter of approximately 5 mm and are caused to move by a vibrating rod (52) introduced into the adapter (13a) and connected to an exciter supplied with a high-frequency current.

11. Device for repairing a defective zone of the internal surface of a penetration adapter (13a) of the cover of a nuclear reactor vessel, characterised in that it comprises:
- a melting device (21, 21', 21'') of a generally tubular shape of which the diameter is less than the inside diameter of the adapter (13a);
- equipment (50) for compressing the internal surface of the adapter (13a) by repeated particle impact (55), comprising at least one portion (52) which can be introduced into the adapter (13a);
- optionally, a removable plug (37, 37', 37'') for closing the adapter (13a); and
- means (16, 17) for displacing the melting device (21, 21', 21'') and the compression equipment (50) in the axial direction of the adapter (13a).

12. Device according to Claim 12, characterised in that it also comprises means (16) for rotating the melting device (21, 21', 21'') inside the adapter (13a) about the axis of the tubular piece (13a).

13. Device according to either Claim 11 or Claim 12, characterised in that the melting device (21) is a transferred plasma arc welding torch comprising an electrode and at least two ducts which are arranged peripherally around the electrode and which are connected to a source of inert gas.

14. Device according to either Claim 13 or Claim 14, characterised in that the melting device (21') is a device for melting by laser beam (30), comprising, inside a casing (21'a), an outlet end portion (25a) of an optical fibre (25), optical means (26a, 26b; 27) for focusing and orientating a laser beam (30) arriving in the casing (21'a) by way of the fibre (25) so that the beam (30) is directed towards the internal surface of the adapter (13a) and the beam (30) is focused inside the wall of the adapter (13a);
- and also means (34) for guiding the casing (21'a) inside the adapter (13a), maintaining a constant spacing between the casing (21'a) and the internal wall of the adapter (13a).

15. Device according to Claim 14,
characterised in that the device (21') comprises a duct (31) for supplying the internal volume of the casing (21'a) with an inert gas.

16. Device according to any one of Claims 11 to 15, characterised in that the equipment (50) for compressing the internal surface of the adapter (13a) by repeated impact with balls (55) comprises an exciter (51) which is connected to a high-frequency current source and which comprises a vibrating portion and also a vibrating rod (52) which is connected to the vibrating portion of the exciter (51) and which comprises an end portion (52a) which has a concave outer surface symmetrical in rotation about the axis of the rod (52) and which is delimited by two portions (52b, 52c) having a circular cross-section which is widened in diameter, which diameter is less than the inside diameter of the tubular piece (13a), and means (56a, 56b, 56c) for centring the rod (52) in a coaxial position inside the adapter (13a).

17. Device according to Claim 16,
characterised in that the means (56a, 56b, 56c) for centring the rod (52) are formed by air cushion pads supplied with compressed air via a channel (58) in an axial arrangement inside the rod (52).

18. Device according to Claim 17,
characterised in that the rod (52) comprises at least one groove (60) between the end portion (52a) delimiting a ball-blasting chamber (54) and the air cushion centring pads (56a, 56b, 56c) so that the air introduced into the air cushion pads is recovered.

## Patentansprüche

1. Verfahren zum Reparieren eines defekten Abschnitts der Wand eines Durchgangsadapters (13a) des Deckels eines Druckwasserkernreaktors, in dem eine Wärmeisolierhülse angeordnet ist, wobei das Metall der Wand Fehler wie etwa Risse im defekten Abschnitt aufweist, dadurch gekennzeichnet, daß
- die Wärmeisolierhülse des zu reparierenden Adapters mit einem der folgenden Verfahren abgeschnitten wird: Bearbeiten mit einem Schneidwerkzeug, mit einem Wasserstrahl, durch Funkenerosion;
- die Wärmeisolierhülse aus dem Adapter (13a) herausgezogen wird;
- die Innenoberfläche des Adapters (13a) mit einem der folgenden Verfahren kontrolliert wird; durch Wirbelströme, Ultraschall, Ausschwitzen, um den zu reparierenden defekten Abschnitt zu lokalisieren;
- ein Schmelzen, gefolgt von einer Verfestigung, des Metalls der Wand des Adapters (13a) in dem defekten Abschnitt mit Hilfe einer Wärmequelle (21, 21', 21'') durchgeführt wird;
- eine Oberflächenschicht des Metalls der Wand des Adapters (13a) wenigstens in dem defekten Abschnitt nach dem Schmelzen und der Verfestigung durch wiederholtes Stoßen mit festen Teilchen (55) komprimiert wird;
- durch Wirbelströme oder Ultraschall der Abschnitt des Adapters (13a) kontrolliert wird, der geschmolzen verfestigt und komprimiert worden ist, und
- eine neue Wärmeisolierhülse im Innern des Adapters (13a) angebracht wird.

2. Verfahren nach Anspruch 1, dadurch gekennzeichnet, daß das Schmelzen durch ein Lichtbogenplasma bewirkt wird, welches mit Einblasen eines Inertgases wie Argon in einen Lichtbogenerzeugungsabschnitt zwischen einer Elektrode und dem Element (13a) verschoben wird.

3. Verfahren nach Anspruch 2, dadurch gekennzeichnet, daß ein Metallpulver in den Lichtbogenerzeugungsabschnitt eingeblasen wird, um eine Metallschicht (24) auf der Oberfläche des Elements (13a) abzulagern.

4. Verfahren nach Anspruch 1, dadurch gekennzeichnet, daß das Schmelzen mit einer durch einen Laserstrahl (30) gebildeten Wärmequelle durchgeführt wird.

5. Verfahren nach Anspruch 4, dadurch gekennzeichnet, daß der Laserstrahl (30) während des Schmelzens fokussiert ist, um einen Brennfleck (30a) mit konstanter Tiefe innerhalb der Wand des metallischen Elements (13a) zu bilden.

6. Verfahren nach Anspruch 1, dadurch gekennzeichnet, daß das Schmelzen durch einen elektrischen Strom bewirkt wird, der einer Elektrode (44) zugeführt wird, die in der Nähe der Oberfläche des defekten Abschnitts der Wand des Adapters (13a) bewegt wird.

7. Verfahren nach einem der Ansprüche 4, 5 und 6, dadurch gekennzeichnet, daß ein Inertgas wie Argon während des Schmelzens auf die Oberfläche des defekten Abschnitts geblasen wird.

8. Verfahren nach Anspruch 1, dadurch gekennzeichnet, daß die festen Teilchen, die die Kompression einer Oberflächenschicht des Metalls der Wand (13a) bewirken, Kugeln (55), sind, die in der Nähe der Oberfläche der Wand (13a) durch ein vibrierendes Element (52) in Bewegung versetzt werden.

9. Verfahren nach einem der Ansprüche 1 bis 8, dadurch gekennzeichnet, daß der Durchgangsadapter (13a) aus einer Nickellegierung besteht und eine Wanddicke der Größenordnung 15 mm hat, und daß das Schmelzen der Wand des Adapters (13a, 13'a) auf einer Dicke der Größenordnung 3 mm durchgeführt wird.

10. Verfahren nach Anspruch 10, dadurch gekennzeichnet, daß die Kompression der Innenoberfläche des Adapters (13a) aus Nickellegierung durch wiederholte Stöße von Stahlkugeln mit einem Durchmesser von ca. 5 mm bewirkt wird, die durch einen ins Innere des Adapters eingeführten und mit einem mit Hochfrequenzstrom versorgten Erreger verbundenen vibrierenden Stab in Bewegung versetzt werden.

11. Vorrichtung zum Reparieren eines defekten Abschnitts der Innenoberfläche eines Durchgangsadapters (13a) des Deckels eines Druckwasserkernreaktors, in dem eine Wärmeisolierhülse angeordnet ist, wobei das Metall der Wand Fehler wie etwa Risse im defekten Abschnitt aufweist,
dadurch gekennzeichnet, daß sie umfaßt:
- eine im wesentlichen rohrförmige Schmelzvorrichtung (21, 21', 21''), deren Durchmesser kleiner als der Innendurchmesser des Adapters (13a) ist;
- ein Kompressionswerkzeug (50) zum Komprimieren der Innenoberfläche des Adapters (13a) durch wiederholte Stöße von Teilchen (55), mit wenigstens einem in den Adapter (13a) einführbaren Abschnitt (52);
- ggf. einen entfernbaren Stopfen (37, 37', 37'') zum Verschließen des Adapters (13a); und
- Mittel (16, 17) zum Bewegen der Schmelzvorrichtung (21, 21', 21'') und des Kompressionswerkzeugs (50) in Axialrichtung des Adapters (13a).

12. Vorrichtung nach Anspruch 11, ferner gekennzeichnet durch Mittel (16) zum Drehbewegen der Schmelzvorrichtung (21, 21', 21'') im Innern des Adapters (13a) um die Achse des rohrförmigen Elements (13a).

13. Vorrichtung nach einem der Ansprüche 11 oder 12, dadurch gekennzeichnet, daß die Schmelzvorrichtung (21) eine Plasmaschweißfackel mit verschiebbarem Lichtbogen ist, die eine Elektrode und wenigstens zwei um die Elektrode angeordnete und mit einer Inertgasquelle verbundene Leitungen umfaßt.

14. Vorrichtung nach einem der Ansprüche 13 und 14, dadurch gekennzeichnet, daß die Schmelzvorrichtung eine Laserstrahl-(30)-Schmelzvorrichtung ist, die
- in einer Hülle (21'a) einen Endabschnitt mit dem Ausgang (25a) einer optischen Faser (25) sowie optische Mittel (26a, 26b; 27) zum Fokussieren und Orientieren eines Laserstrahls (30), der durch die Faser (25) in die Hülle (21'a) gelangt, um den Strahl (30) auf die Innenoberfläche des Adapters (13a) zu lenken und den Strahl (30) im Innern der Wand des Adapters (13a) zu fokussieren, und
- Führungsmittel (34) zum Führen der Hülle (21'a) im Innern des Adapters (13a) unter Beibehaltung eines konstanten Abstands zwischen der Hülle (21'a) und der Innenwand des Adapters (13a)
umfaßt.

15. Vorrichtung nach Anspruch 14, dadurch gekennzeichnet, daß die Vorrichtung (21') eine Leitung (31) zum Versorgen des Innenraums der Hülle (21'a) mit Inertgas umfaßt.

16. Vorrichtung nach einem der Ansprüche 11 bis 15, dadurch gekennzeichnet, daß das Werkzeug (50) zum Komprimieren der Innenoberfläche des Adapters (13a) durch wiederholte Stöße von Kugeln (55) einen mit einer Hochfrequenzstromquelle verbundenen und einen vibrierenden Bereich aufweisenden Erreger (51) sowie einen mit dem vibrierenden Bereich des Erregers (51) verbundenen vibrierenden Stab (52) umfaßt, der einen Endbereich (52a) mit einer konkaven, um die Achse des Stabs (52) rotationssymmetrischen Außenfläche besitzt, die durch zwei Bereiche (52b, 62c) mit diametral erweitertem kreisförmigem Querschnitt begrenzt ist, deren Durchmesser kleiner als der Innendurchmesser des rohrförmigen Elements (13a) und der Zentriermittel (56a, 56b, 56c) des Stabs (52) in zum Innern des Adapters (13a) koaxialer Position ist.

17. Vorrichtung nach Anspruch 16, dadurch gekennzeichnet, daß die Zentriermittel (56a, 56b, 56c) des Stabs (52) durch Kufen mit Luftkissen gebildet sind, die durch einen axial innerhalb des Stabs (52) angeordneten Kanal (58) mit Druckluft versorgt werden.

18. Vorrichtung nach Anspruch 17, dadurch gekennzeichnet, daß der Stab (52) wenigstens eine Rille (60) zwischen dem eine Kugelkammer (54) begrenzenden Endbereich (52a) und den Luftkissen-Zentrierkufen (56a, 56b, 56c) zum Rückgewinn der in die Luftkissenkufen eingeführten Luft aufweist.
